# EUROPÄISCHE PATENTSCHRIFT

(11) **EP 2 283 262 B1**
(45) Veröffentlichungstag und Bekanntmachung des Hinweises auf die Patenterteilung: **23.12.2015**
(21) Anmeldenummer: 09761576.9
(22) Anmeldetag: 19.05.2009
(51) Int. Cl.: F16K 11/085, F01D 25/00, F02C 7/232

(54) **MEHRWEGEVENTIL EINES BRENNSTOFFSYSTEMS EINER GASTURBINE**
MULTI-WAY VALVE OF A FUEL SYSTEM OF A GAS TURBINE
VANNE À PLUSIEURS VOIES D'UN SYSTÈME D'ALIMENTATION EN COMBUSTIBLE D'UNE TURBINE À GAZ

(30) Priorität: 09.06.2008 DE 102008027410; 27.06.2008 DE 102008030167
(43) Veröffentlichungstag der Anmeldung: 16.02.2011
(73) Patentinhaber: Siemens Aktiengesellschaft, 80333 München (DE)
(72) Erfinder: WAGNER, Ulrich, 51766 Engelskirchen (DE); BASSMANN, Carsten, 41466 Neuss (DE); RAUH, Horst Uwe, 45309 Essen (DE)
(86) Internationale Anmeldenummer: PCT/EP2009/056073
(87) Internationale Veröffentlichungsnummer: WO 2009/150013

(56) Entgegenhaltungen:
- EP-A- 0 240 059
- DE-B- 1 209 382
- DE-C- 460 190
- DE-C- 596 026
- US-A- 5 090 194
- US-A1- 2003 233 823
- US-A1- 2004 173 510

## Beschreibung

Die Erfindung betrifft ein Mehrwegeventil eines Brennstoffsystems einer Gasturbine. Ferner betrifft die Erfindung ein Brennstoffsystem einer Gasturbine mit einem derartigen Mehrwegeventil.

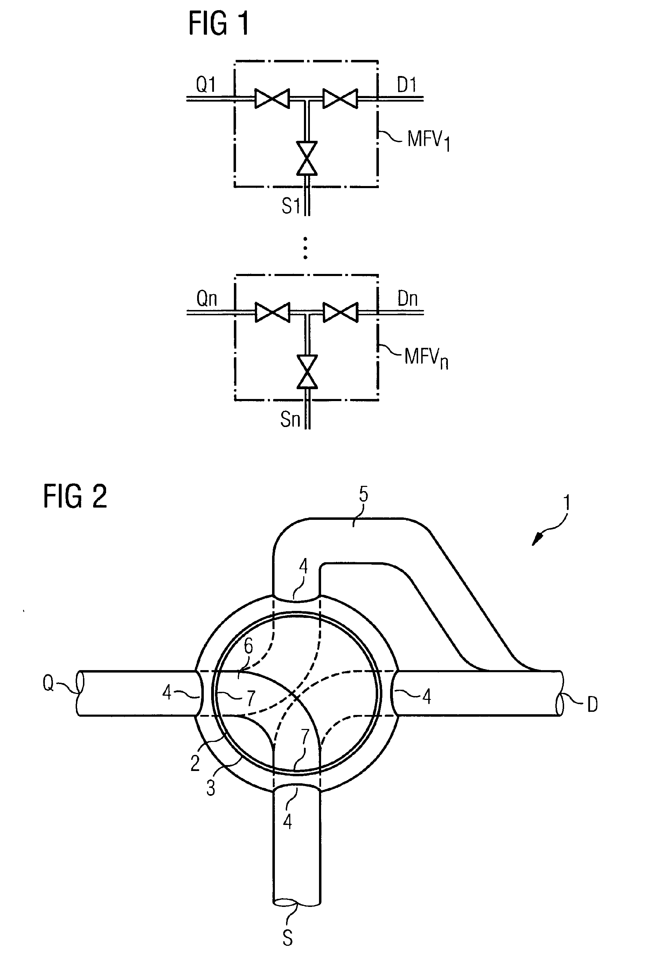

Es existiert bei bekannten Brennstoffsystemen von Gasturbinen für deren Öl- bzw. Brennstoffversorgung ein so genanntes "Multi Function Valve" bzw. Mehrfunktionsventil (MFV) (siehe FIG 1). Dieses MFV umfasst mehrere Ventile, um zwischen einer Ölversorgungsquelle, einer Düse und einer Abflussleitung (Drain) des Brennstoffsystems umschalten zu können. Bei dem Umschalten werden die Ventile zwischen den jeweiligen Rohrleitungen 1..n gleichzeitig über je einen Antrieb gesteuert.

Dabei müssen die Rohrleitungen, insbesondere in Gestalt von Brenner-Verbindungsleitungen für Heizöl und Wasser, in der Art geschaltet werden, dass verschiedene Betriebsweisen wie Heizöl-, Emulsionsbetrieb sowie Spül- und Entleerungsvorgänge durchgeführt werden können.

Es gibt ferner einen Antrieb, um mehrere gleiche Ventile Quelle (Q₁ - Qₙ), Abflussleitung (S₁ - Sₙ) und Düse (N₁ - Nₙ) gleichzeitig anzusteuern. Diese Antriebe sind in der Regel elektrohydraulisch. Es werden also z.B. "n" Ventile in der Quelle-Leitung durch einen Antrieb bewegt. Es sind demnach zumindest drei Antriebe erforderlich.

Neben der Schließung aller Ventile sind folgende Strömungsverbindungen möglich:
Quelle + Abflussleitung (Ventil in Düse-Leitung zu),
Quelle + Düse (Ventil in Abflussleitung zu) und
Abflussleitung + Düse (Ventil in Quelle-Leitung zu). Bekannte Mehrwegeventile sind noch verhältnismäßig aufwändig und störanfällig.

Darüber hinaus sind Kugelhähne unterschiedlicher Ausgestaltung aus mehreren Druckschriften bekannt. Beispielsweise zeigt die EP 0 240 059 ein hydrostatisch ausbalanciertes Kugelventil. Daneben ist ein besonders dichter Absperrhahn mit einem kugelförmigen oder zylindrischen Küken aus der DE 12 09 382 bekannt. Ferner ist ein Verteilventil aus der US 5,090,194 bekannt, welches einen Drehschieber aufweist, der mehrere in unterschiedliche Ebenen angeordnete Anschlüsse miteinander verbindet. Darüber hinaus ist die Anordnung eines Drehschiebers in einer Aufnahme aus der DE 596 026 bekannt. Ebenso beschreibt die DE 460 190 die Anordnung eines Drehschiebers, bei dem die Ventilkörper um eine gemeinsame Achse geschwenkt werden können.

Es ist eine Aufgabe der Erfindung ein Brennstoffsystem einer Gasturbine zu schaffen, bei dem die oben genannten Nachteile überwunden und insbesondere eine sichere und einfache Fernbedienung der Schaltvorgänge der zugehörigen Ventile möglich ist. Ferner sind für neue Gasturbinentypen neue Verschaltungsmöglichkeiten zu schaffen.

Die Aufgabe ist mit einem Mehrwegeventil gemäß Anspruch 1 gelöst. Vorteilhafte Weiterbildungen der erfindungsgemäßen Lösung sind in den abhängigen Ansprüchen beschrieben. Ferner ist die Aufgabe mit einem Brennstoffsystem einer Gasturbine mit einem erfindungsgemäßen Mehrwegeventil gelöst.

Gemäß der Erfindung ist ein Mehrwegeventil eines Brennstoffsystems einer Gasturbine geschaffen, bei dem ein mit einer zylindrischen Aufnahme versehenen Ventilkörper vorgesehen ist, in dessen die Aufnahme begrenzenden Wand mehrere Öffnungen zur Zuführung und/oder Abführung von Fluiden angeordnet sind, wobei in der Aufnahme ein beweglich gelagerter Einsatz mit zumindest einem Kanal mit zwei weiteren Öffnungen vorgesehen ist, mittels dem zwei benachbarte Öffnungen miteinander strömungstechnisch verbindbar sind.

Bei der erfindungsgemäßen Lösung sind die Öffnungen in einer Ebene senkrecht zur Mittelachse der Aufnahme liegend angeordnet und der Einsatz korrespondierend zur Aufnahme ausgebildet und um seine Mittelachse drehbar in der Aufnahme gelagert. Der drehbare Einsatz bildet ein einfach zu betätigendes Steuerelement.

Bei der erfindungsgemäßen Lösung weist die Aufnahme an mindestens zwei axialen Positionen jeweils mehrere, in einer Ebene liegende Öffnungen auf und der Einsatz in zu dem Abstand der Ebenen korrespondierenden Abstand für jede Ebene zumindest einen Kanal, um die innerhalb einer der Ebenen liegenden Öffnungen strömungstechnisch miteinander zu verbinden. Es können so mehrere, gleichzeitig zu betätigende Ventile mit nur einem Schaltelement ausgebildet und betätigt werden.

Erfindungsgemäß ist vorgesehen, dass zwei im Ventilkörper angeordnete Brücken vorgesehen sind, die jeweils in unterschiedlichen Ebenen angeordnete Öffnungen miteinander verbinden.

Bei einer ersten vorteilhaften Weiterbildung der erfindungsgemäßen Lösung ist "m" die Anzahl der Öffnungen entlang eines Umlaufs entlang der Wand. Der Einsatz weist einen Kanal auf, dessen weitere Öffnungen um einen Winkel α entlang dessen Umfangs zueinander versetzt angeordnet sind, für den Winkel α gilt: α = 360°/m. Es können auf diese Weise am Umfang verteilt mehrere Schaltstellungen realisiert werden.

Bei einer zweiten vorteilhaften Weiterbildung der erfindungsgemäßen Lösung sind vier Öffnungen gleichmäßig entlang des Umfangs der zylindrischen Aufnahme verteilt und die weiteren Öffnungen des im Einsatz angeordneten Kanals sind entlang des Umfangs in einem Winkel zueinander angeordnet sind, welcher gleich 90° ist. Diese Gestaltung bietet bei ausreichendem Schaltabstand gleichzeitig ausreichend viele Schaltstellungen.

Bei dem erfindungsgemäßen Brennstoffsystem ist das Mehrwegeventil als ein 3/3-Wegeventil und ein damit betrieblich gekoppeltes 4/3-Wegeventil gestaltet. Die derartige Schaltungsanordnung aus den beiden genannten Wegeventilen erfüllt überraschenderweise sämtliche erforderlichen Schaltfunktionen und ist dabei zugleich besonders einfach, kostengünstig und betriebssicher zu betätigen.

Bei einer letzten vorteilhaften Weiterbildung der erfindungsgemäßen Lösung sind mehrere jeweils einem Brenner zugeordnete Scheibenpaare aufeinander folgend angeordnet. Es können auf diese Weise beliebig viele Kanäle bzw. Brenner einer Gasturbine versorgt werden. Die Scheiben können leicht gemeinsam betätigt werden, indem sie auf einer Welle drehfest angeordnet werden.

Nachfolgend wird ein Ausführungsbeispiel der erfindungsgemäßen Lösung anhand der beigefügten, schematischen Zeichnungen näher erläutert.

Es zeigt:
- FIG 1: eine Prinzipskizze eines MFV gemäß dem Stand der Technik,
- FIG 2: eine Draufsicht eines ersten Ausführungsbeispiels eines Mehrwegeventils,
- FIG 3: eine perspektivische Ansicht eines Einsatzes des Mehrwegeventils gemäß FIG 2,
- FIG 4: eine perspektivische Ansicht eines zweiten Ausführungsbeispiels eines Mehrwegeventils mit dessen Aufnahme und Einsatz,
- FIG 5: eine Skizze des Schaltungsprinzips eines zu realisierenden Brennstoffsystems einer Gasturbine,
- FIG 6: eine Skizze des Schaltungsprinzips eines 3/3-Wegeventils,
- FIG 7: eine Prinzipskizze der erfindungsgemäßen Schaltungsanordnung mit einem 3/3-Wegeventil und einem 4/3-Wegeventil und
- FIG 8: eine perspektivische Ansicht eines Ausführungsbeispiels eines Mehrwegeventils gemäß der Schaltungsanordnung von FIG 7.

Bei dem in den FIG 2 bis 4 dargestellten Ausführungsbeispiel sind die bisher einzelnen Ventile eines MFV gemäß dem Stand der Technik (vergleiche FIG 1) durch ein Mehrwegeventil bzw. eine Vorrichtung 1 ersetzt, mit der durch Verdrehen oder Verschieben eines darin eingesetzten Einsatzes 2 zwischen verschiedenen Ein- und Ausgängen umgeschaltet werden kann.

So ist bei dem dargestellten Ausführungsbeispiel in einem Ventilkörper eine Bohrung als zylindrische Aufnahme 3 vorhanden. In der die Aufnahme 3 begrenzende Wand sind in einer Ebene senkrecht zur Mittelachse der Aufnahme 3 liegend vier um jeweils 90° versetzte Öffnungen 4 als Einlässe oder Auslässe ausgebildet. Sie sind also entlang des Umfangs gleichmäßig verteilt. Zwei der Öffnungen 4 sind durch eine externe Brücke 5 außerhalb der Aufnahme 3 strömungstechnisch miteinander verbunden. In der Aufnahme 3 ist der um seine Mittelachse verdrehbare zylindrische Ventilzylinder bzw. Einsatz 2 angeordnet, welcher passgenau zur Aufnahme 3 ausgebildet ist. Der Einsatz 2 weist einen gekrümmten Kanal 6 auf, dessen Öffnungen als so genannte weitere Öffnungen 7 am Umfang in einem Winkel von 90° zueinander angeordnet sind.

Die erste der Öffnungen 4 kann beispielsweise mit einer Quelle Q, beispielsweise für Brennstoff, verbunden sein, die zweite der Öffnungen mit einem Abflussleitung S, und die dritte und vierte der Öffnungen 4 über die Brücke 5 mit einer Düse N eines Gasturbinenbrenners.

Bei der in Volllinie dargestellten Position des Kanals 6 ist die Quelle mit dem Abflussleitung verbunden. Durch Drehen des Einsatzes 2 um einen Winkel von 90° entgegen des Uhrzeigersinns wird der Kanal 6 in die gestrichelte Position verbracht, wodurch Abflussleitung S und Düse N miteinander verbunden sind.

Wird dagegen der Einsatz 2 im Uhrzeigersinn um 90° gedreht - ausgehend von der in Volllinie dargestellten Position -, so wird die Quelle Q über den im Einsatz 2 angeordneten Kanal 6 und mittels der Brücke 5 mit der Düse N verbunden.

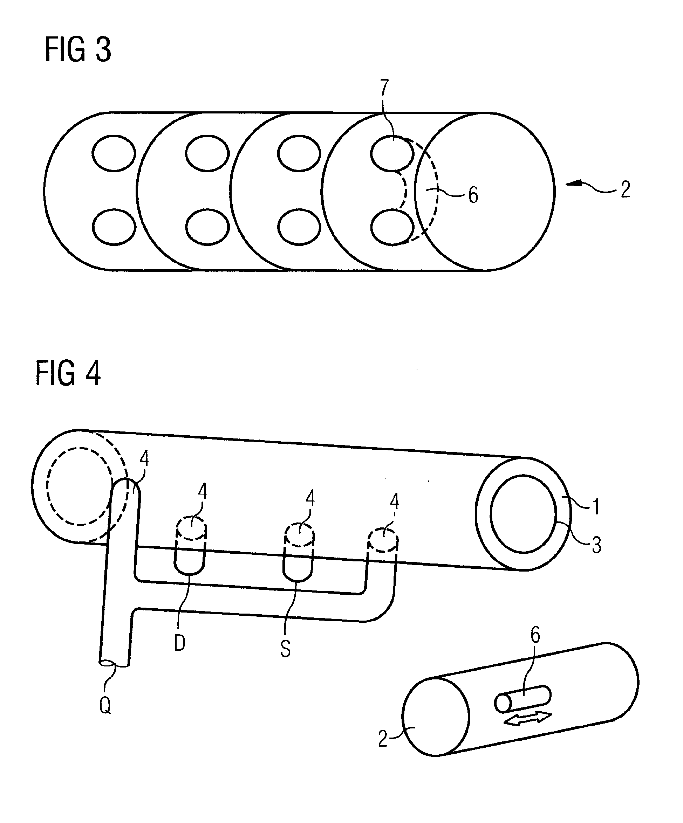

Um für mehrere Brennstoffleitungen unterschiedlicher Brennstoffstufen und/oder unterschiedlicher Brenner eine synchrone Umschaltung zu erreichen, sind im Ventilkörper 1 entlang der Mittelachse der Aufnahme 3 mehrere der voran beschriebenen Ventile verteilt (vergleiche den zugehörigen Einsatz gemäß FIG 3). Somit sind zumindest zwei, vorzugsweise n - mit "n" = Anzahl der Brennstoffleitungen - mal vier in jeweils einer Ebene liegenden Öffnungen 4 zum Anschluss der jeweiligen Leitung: Quelle Q, Abflussleitung S, Brücke 5 und Düse N vorgesehen. Der zugehörige Einsatz 2 weist, wie in FIG 3 perspektivisch dargestellt, ebenfalls gestapelte Kanäle 6 zum Verbinden der jeweiligen in einer der Ebenen liegenden Öffnungen 4 auf.

Bei einem weiteren, nicht dargestellten Ausführungsbeispiel sind anstelle von vier in einer Ebene angeordneten Öffnungen 4 nur drei entlang des Umfangs gleichmäßig verteilte Öffnungen 4 vorhanden. In diesem Fall sind die weiteren Öffnungen 7 des im Einsatz 2 angeordneten Kanals 6 um 120° (= 360° / Anzahl der Öffnungen in einer Ebene, hier = 3) versetzt.

Bei dem in FIG 4 dargestellten Ausführungsbeispiel sind die einzelnen Anschlüsse bzw. Öffnungen 4 für Quelle Q, Abflussleitung S und Düse N nicht entlang des Umfangs der Aufnahme 3 bzw. Bohrung verteilt, sondern in Axialrichtung der Bohrung, in gleichen Abständen. Für diesen Fall sind in der zylindrischen Oberfläche des Einsatzes 2 in Axialrichtung verlaufende Nuten 6 mit einer axialen Länge vorgesehen, die die Verbindung zweier unmittelbar axial benachbarter Öffnungen 4 ermöglicht. Durch eine axiale Verschiebung des Einsatzes 2 können dann benachbarte Öffnungen 4 miteinander verbunden werden. Für n Brennstoffleitungen sind diese dann axial gestaffelt anzuordnen. Dies führt jedoch ggf. zu einer größeren axialen Baulänge des Mehrwegeventils 1.

Durch die oben beschriebene Anordnung lassen sich alle Ventilstellungen durch einen Antrieb erreichen. Ebenso muss nicht für jeden Weg ein Ventil eingebaut werden, sondern es reicht eine Dreh- und/oder Verschiebeeinrichtung zur Bewegung des Einsatzes für mehrere Ventile. Daher ist der Aufbau kostengünstiger und platzsparender. Ferner lässt sich die beschriebene Einheit durch andere Einsätze variabel gestalten wenn z.B. mehrere Ein- und Ausgänge miteinander verschaltet werden sollen.

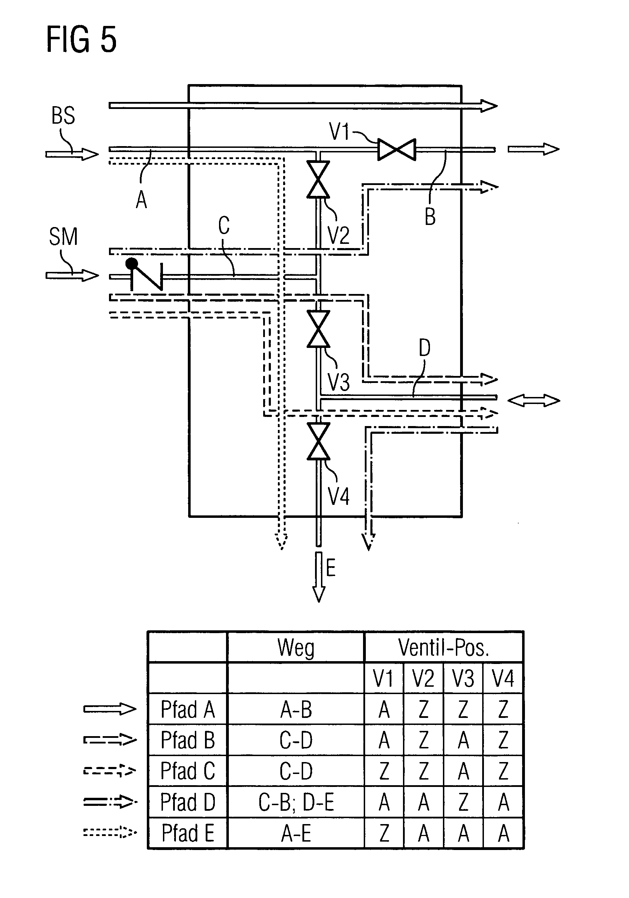

In FIG 5 ist das Schaltungsprinzip eines weiteren Brennstoffsystems einer Gasturbine dargestellt, bei dem durch eine Leitung A Brennstoff BS zu einer (zu einem nicht dargestellten Brenner führenden) Leitung B gefördert wird (Weg A-B = Pfad A). Dabei ist in der Leitung ein (dann offenes) Sperrventil V1. Von der Leitung A zweigt in Strömungsrichtung vor dem Sperrventil V1 eine Leitung ab, in der sich ein zweites (dann geschlossenes) Sperrventil V2 befindet. In Strömungsrichtung hinter dem Sperrventil V2 stößt auf diese Leitung eine Leitung C, in die ein Spülmedium SM eingespeist werden kann. In der Leitung C befindet sich zudem ein Rückschlagventil. Ein drittes Sperrventil V3 ermöglicht es, das Spülmedium zu einer Leitung D durchzuschleusen (Weg C-D = Pfad B, C), wobei ein viertes Ventil V4 eine Drainageleitung bzw. eine Abflussleitung E absperrt.
Ferner kann mit der Spülflüssigkeit SM durch die Ventile V2 und V1 hindurch die Leitung B gespült werden (Weg C-B = Pfad D), während zugleich das Ventil V4 die Abflussleitung E öffnet und das Ventil V3 ein Rückströmen von Spülflüssigkeit SM in die Leitung C verhindert (Weg D-E = Pfad D).

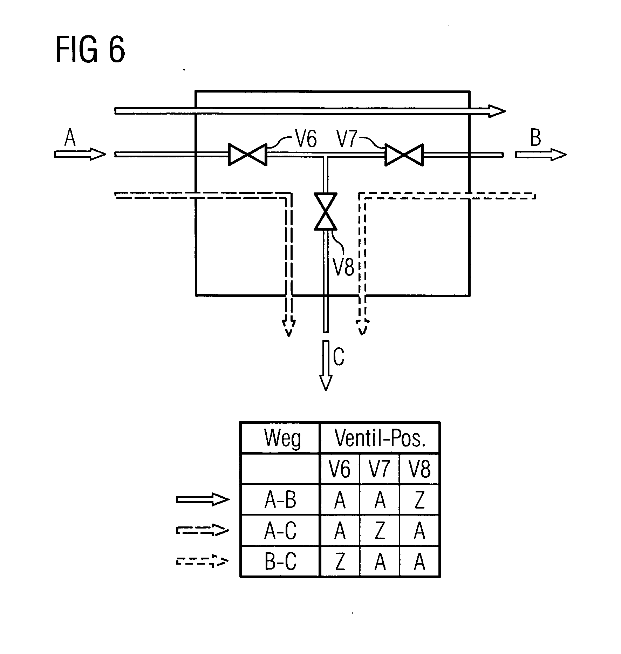

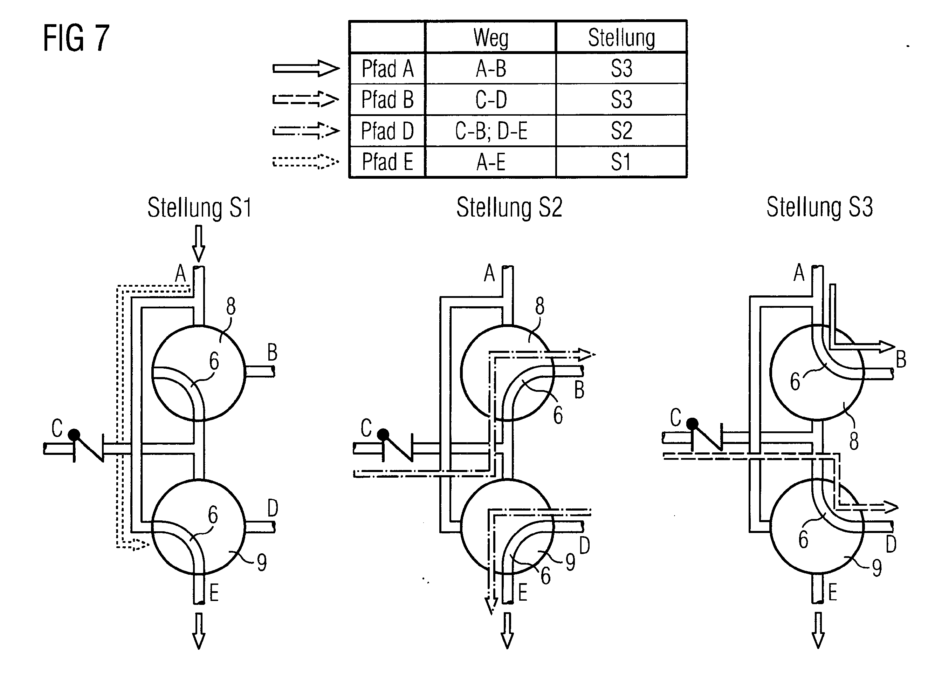

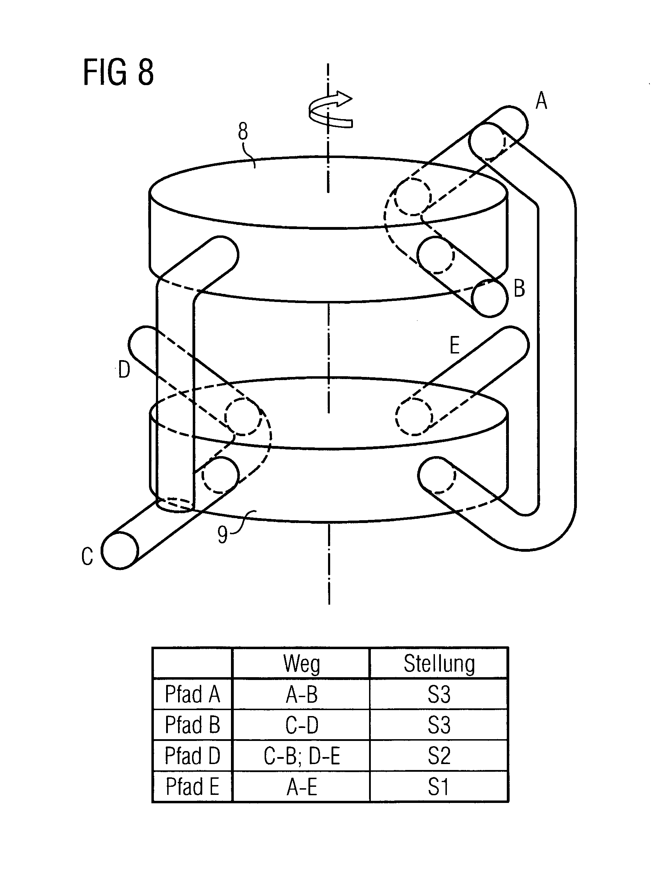

Alle Schaltfunktionen sind bei dem in den FIG 7 und 8 dargestellten Ausführungsbeispiel durch eine Kombination von einem 3/3-Wegeventil und einem gleichzeitig mit diesem geschalteten 4/3-Wegeventil realisiert. FIG 6 zeigt dabei den Grundaufbau eines verwendeten 3/3-Wegeventils.

Wie in FIG 7 zu erkennen ist, umfasst das dort dargestellte Mehrwegeventil einen Einsatz 2 mit zwei Scheiben, nämlich den Scheiben 8 und 9, in denen sich (entsprechend den FIG 2 bis 4) jeweils ein Kanal 6 befindet. Die die Scheiben 8 und 9 umgebende Aufnahme 3 enthält zugehörige Öffnungen, so dass die Scheibe 8 als 3/3-Wegeventil und die Scheibe 9 als 4/3-Wegeventil wirkt. Die dabei jeweils eingenommen Schaltstellungen S1 bis S3 sind den drei Teilfiguren zu entnehmen.

In der FIG 8 ist die gesamte Anordnung gemäß FIG 7 in perspektivischer Ansicht schematisch dargestellt. Dabei ist zu erkennen, dass zur Realisierung der Schaltungsanordnung die Leitungen A und C mittels in der Aufnahme 3 ausgebildeten Brücken 5 sowohl zur ersten Scheibe 8 als auch zur zweiten Scheibe 9 geführt sind, während die Leitung B allein zur ersten Scheibe 8 führt und die Leitungen D und E allein zur zweiten Scheibe 9 führen. Die FIG 8 zeigt die Stellung S3, wobei die Stellung S2 von den beiden, miteinander drehfest gekoppelten Scheiben 8 und 9 um 90° nach rechts verdreht und die Stellung S1 um weitere 90° nach rechts verdreht eingenommen wird.

## Patentansprüche

1. Mehrwegeventil eines Brennstoffsystems einer Gasturbine, mit einem mit einer zylindrischen Aufnahme (3) versehenen Ventilkörper (1), in dessen die Aufnahme (3) begrenzende Wand mehrere Öffnungen (4) zur Zuführung und/oder Abführung von Fluiden angeordnet sind,
wobei in der Aufnahme (3) ein beweglich gelagerter Einsatz (2) mit zumindest einem Kanal (6) mit zwei weiteren Öffnungen (7) vorgesehen ist, mittels dem zwei benachbarte Öffnungen (4) miteinander strömungstechnisch verbindbar sind, wobei die Öffnungen (4) in einer Ebene senkrecht zur Mittelachse der Aufnahme (3) liegend angeordnet sind und bei dem der Einsatz (2) korrespondierend zur Aufnahme (3) ausgebildet und um seine Mittelachse drehbar in der Aufnahme (3) gelagert ist,
wobei die Aufnahme (3) an mindestens zwei axialen Positionen jeweils mehrere, in einer Ebene liegende Öffnungen (4) aufweist und der Einsatz (2) in zu dem Abstand der Ebenen korrespondierendem Abstand für jede Ebene zumindest einen Kanal (6) aufweist, um die innerhalb einer der Ebenen liegenden Öffnungen (4) strömungstechnisch miteinander zu verbinden,
**dadurch gekennzeichnet, dass**
zwei im Ventilkörper (1) angeordnete Brücken vorgesehen sind, die jeweils in unterschiedlichen Ebenen angeordnete Öffnungen (4) miteinander verbinden.

2. Mehrwegeventil nach Anspruch 1,
bei dem "m" die Anzahl der Öffnungen (4) entlang eines Umlaufs entlang der Wand ist und bei dem der Einsatz (2) einen Kanal (6) aufweist, dessen weitere Öffnungen (7) um einen Winkel α entlang dessen Umfang zueinander versetzt angeordnet sind, für den Winkel α gilt: α = 360°/m.

3. Mehrwegeventil nach Anspruch 2,
bei dem vier Öffnungen (4) gleichmäßig entlang des Umfangs der zylindrischen Aufnahme (3) verteilt sind und die weiteren Öffnungen (7) des im Einsatz (2) angeordneten Kanals (6) entlang des Umfangs in einem Winkel zueinander angeordnet sind, welcher gleich 90° ist.

4. Brennstoffsystem einer Gasturbine,
mit einem Mehrwegeventil nach einem der Ansprüche 1 bis 3, dessen eine Ebene als ein 3/3-Wegeventil und dessen andere Ebene als ein 4/3-Wegeventil gestaltet ist zur Ausbildung eines 5/3-Wegeventils.

5. Brennstoffsystem nach Anspruch 4,
bei dem mehrere jeweils einem Brenner zugeordnete Scheibenpaare aufeinander folgend angeordnet sind.

6. Gasturbine mit einem Brennstoffsystem nach Anspruch 4 oder 5.

## Claims

1. Multi-way valve of a fuel system of a gas turbine, with a valve body (1) which is provided with a cylindrical housing (3), a plurality of ports (4) for the feed and/or drain of fluids being arranged in the wall of the valve body which delimits the housing (3),
wherein provision is made in the housing (3) for a movably supported insert (2) with at least one passage (6) with two additional ports (7) by means of which two adjacent ports (4) can be fluidically interconnected,
wherein the ports (4) are arranged lying in one plane perpendicularly to the center axis of the housing (3) and in which the insert (2) is formed corresponding to the housing (3) and is supported in the housing (3) in a manner in which it can rotate around its center axis,
wherein the housing (3), at at least two axial positions, has in each case a plurality of ports (4) which lie in one plane, and the insert (2), at a distance which corresponds to the spacing of the planes, has at least one passage (6) for each plane in order to fluidically interconnect the ports (4) which lie inside one of the planes,
**characterized in that**
provision is made for two bridges which are arranged in the valve body (1) and which in each case interconnect ports (4) which are arranged in different planes.

2. Multi-way valve according to Claim 1,
in which "m" is the number of ports (4) along a circumference along the wall and in which the insert (2) has a passage (6), the additional ports (7) of which are arranged in an offset manner to each other by an angle α along its circumference, α = 360°/m being applicable to the angle α.

3. Multi-way valve according to Claim 2,
in which four ports (4) are distributed uniformly along the circumference of the cylindrical housing (3) and the additional ports (7) of the passage (6) which is arranged in the insert (2) are arranged along the circumference at an angle to each other, which is equal to 90°.

4. Fuel system of a gas turbine,
with a multi-way valve according to one of Claims 1 to 3, one plane of which is configured as a 3/3 directional valve and the other plane of which is configured as a 4/3 directional valve for forming a 5/3 directional valve.

5. Fuel system according to Claim 4,
in which a plurality of disk pairs, which are associated in each case with a burner, are arranged in series.

6. Gas turbine with a fuel system according to Claim 4 or 5.

## Revendications

1. Vanne à plusieurs voies d'un système d'alimentation en combustible d'une turbine à gaz, comprenant un corps ( 1 ) de vanne, qui est pourvue d'un logement ( 3 ) cylindrique et dans la paroi délimitant le logement ( 3 ) duquel sont ménagées plusieurs ouvertures ( 4 ) d'apport et/ou d'évacuation de fluide,
dans laquelle il est prévu dans le logement ( 3 ) un insert ( 2 ) monté mobile et ayant au moins un canal ( 6 ) ayant deux autres ouvertures ( 7 ), au moyen duquel deux ouvertures ( 4 ) voisines peuvent communiquer fluidiquement l'une avec l'autre, les ouvertures ( 4 ) étant dans un plan perpendiculaire à l'axe médian du logement ( 3 ) et dans laquelle l'insert ( 2 ) est constitué de manière correspondante au logement ( 3 ) et est monté tournant autour de son axe médian dans le logement ( 3 ),
dans laquelle le logement ( 3 ) a, en au moins deux positions axiales, respectivement plusieurs ouvertures ( 4 ) se trouvant dans un plan et l'insert ( 2 ) a, à une distance correspondant à la distance des plans, pour chaque plan, au moins un canal pour faire communiquer entre elles fluidiquement les ouvertures ( 4 ) se trouvant dans l'un des plans,
**caractérisée en ce que**
il est prévu deux ponts qui sont disposés dans le corps ( 1 ) de vanne et qui font communiquer entre elles respectivement des ouvertures ( 4 ) disposées dans des plans différents.

2. Vanne à plusieurs voies suivant la revendication 1,
dans lequel "m" est le nombre des ouvertures ( 4 ), le long d'un pourtour, le long de la paroi et dans lequel l'insert ( 2 ) a un canal ( 6 ) dont d'autres ouvertures ( 7 ) sont décalées les unes par rapport aux autres d'un angle α le long de ce pourtour, l'angle α étant : α = 360°/m.

3. Vanne à plusieurs voies suivant la revendication 2,
dans lequel quatre ouvertures ( 4 ) sont réparties de manière équidistante le long du pourtour du logement ( 3 ) cylindrique et les autres ouvertures ( 7 ) du canal ( 6 ) disposées dans l'insert ( 2 ) sont disposées les unes par rapport aux autres le long du pourtour suivant un angle qui est égal à 90°.

4. Système d'alimentation en combustible d'une turbine à gaz, comprenant une vanne à plusieurs voies suivant l'une des revendications 1 à 3, dont un plan est conformé en vanne à 3/3 voies et dont l'autre plan est conformé en vanne 4/3 voies pour la constitution d'une vanne à 5/3 voies.

5. Système d'alimentation en combustible suivant la revendication 4,
dans lequel plusieurs paires de disques associées à respectivement un brûleur sont disposées en se suivant l'une l'autre.

6. Turbine à gaz ayant un système d'alimentation en combustible suivant la revendication 4 ou 5.
